(19) Europäisches Patentamt
European Patent Office
Office européen des brevets

(11) **EP 2 773 016 A1**

(12) **EUROPEAN PATENT APPLICATION**
published in accordance with Art. 153(4) EPC

(43) Date of publication:
**03.09.2014 Bulletin 2014/36**

(51) Int Cl.:
*H02J 7/34* *(2006.01)*          *H02J 9/06* *(2006.01)*

(21) Application number: **11861330.6**

(86) International application number:
**PCT/JP2011/074807**

(22) Date of filing: **27.10.2011**

(87) International publication number:
**WO 2013/061443 (02.05.2013 Gazette 2013/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventors:
• **MIZUNO, Tomoyuki
Toyota-shi
Aichi 471-8571 (JP)**

• **KINOMURA, Shigeki
Toyota-shi
Aichi 471-8571 (JP)**

(74) Representative: **TBK
Bavariaring 4-6
80336 München (DE)**

(54) **POWER SUPPLY SYSTEM AND VEHICLE**

(57)     A power supply system includes a vehicle (10), and a power feeding device (200, 300) for receiving power from the vehicle (10) and feeding the received power to a load (400) external to the vehicle. The vehicle (10) includes a power generation unit (100, 135), a power feeding unit (120) for receiving power from the power generation unit (100,135) and supplying the received power to the power feeding device (200, 300), a storage unit (145) for storing therein a specification of power supplied from an external power supply (500) to the load (400), and a control device (130) that controls the power feeding unit (120) to convert power that is received from the power generation unit (100, 135) into power to drive the load (400), as based on the specification of the supplied power that is stored in the storage unit (145), once the external power supply (500) has failed.

FIG.4

**Description**

TECHNICAL FIELD

The present invention relates to a power supply system and a vehicle, and more specifically to supplying power from a vehicle to a load external to the vehicle.

BACKGROUND ART

Electric vehicles, hybrid vehicles, fuel cell powered vehicles and other similar vehicles configured to be capable of generating force via an electric motor to drive the vehicle have a power storage device mounted therein to store power to drive the electric motor. When such a vehicle is started, accelerated or the like, the power storage device supplies the motor with power to generate force to drive the vehicle, whereas when the vehicle travels downhill, is decelerated or the like, the motor's regenerative braking generates power which is in turn supplied to the power storage device.

For such a vehicle, there has been proposed a configuration electrically connectable to a commercial power grid or a similar power supply external to the vehicle (hereinafter also simply referred to as an "external power supply") to electrically charge the power storage device (hereinafter also simply referred to as external charging). For example, a so called plug-in hybrid vehicle is known that allows an electrical outlet provided in premises to be connected to the vehicle's charging port via a charging cable to allow the power storage device to be electrically charged from a power supply of an ordinary household. This can increase the hybrid vehicle's fuel consumption efficiency.

For such an externally chargeable vehicle, a concept has been discussed to consider the vehicle as a power supply source to supply power from the vehicle to a load external to the vehicle, as seen in the smart grid.

For example, Japanese Patent Laying-Open No. 2010-154637 (Patent Literature 1) discloses a power supply system allowing a power supply equipped vehicle and premises to be connected via a power supply cable and thereby bidirectionally supply power therebetween. Patent Literature 1 describes that the vehicle is provided with a controller to control supplying power. The vehicular controller communicates with that of the premises by superimposing data on a power line including the power supply cable. When the vehicle is connected to the premises via the power supply cable, the vehicular controller switches plug-out power supply which supplies power from a vehicular power supply to the premises and plug-in power supply which supplies power from a power supply for the premises to the vehicle, as based on a voltage of a commercial power supply in the premises transmitted from the controller of the premises, the vehicular power supply's state of charge, and the like.

CITATION LIST

PATENT LITERATURE

PTL 1: Japanese Patent Laying-Open No. 2010-154637
PTL 2: Japanese Patent Laying-Open No. 2001-008380

SUMMARY OF INVENTION

TECHNICAL PROBLEM

A configuration allowing electric power to be supplied from a vehicle's power supply to premises, as described in Patent Literature 1, may allow the vehicle to be used as a backup power supply for a commercial power supply to supply the premises with power when the commercial power supply has failed. In Patent Literature 1, however, once the commercial power supply has failed, the premises' controller stops operation (or is shut down) and cannot transmit to the vehicular controller the voltage of the commercial power supply in the premises. In such a situation, the vehicular controller cannot obtain the state of the power supply for the premises and hence cannot determine a specification (or frequency and voltage) of power to be supplied to the premises from the vehicular power supply. As a result, the vehicle cannot convert the vehicular power supply's power to power suitable for driving household electrical appliance in the premises, and it is thus difficult to supply power from the vehicular power supply to the premises.

The present invention has been made to overcome such a disadvantage, and it contemplates a power supply system ensuring that a vehicle's power is supplied to a load external to the vehicle when external power supply has failed.

SOLUTION TO PROBLEM

The present invention in one aspect provides a power supply system including a vehicle and a power feeding device for receiving power from the vehicle and feeding the received power to a load external to the vehicle. The load is configured to receive power supplied from an external power supply and be driven thereby and to also receive power from the vehicle and be driven thereby once the external power supply has failed. The vehicle includes: a power generation unit; a power feeding unit for receiving power from the power generation unit and supplying the received power to the power feeding device; a storage unit for storing therein a specification of power supplied from the external power supply to the load; and a control device that stores the specification of the supplied power to the storage unit when the external power supply normally operates, and that also controls the power feeding unit to convert power that is received from the power generation unit into power to drive the load, as based on the specification of the supplied power that is stored in the storage unit, once the external power supply has failed.

Preferably, the vehicle further includes a communication unit for communicating with the power feeding device, and when the external power supply normally operates, the control device receives the specification of the supplied power from the power feeding device via the communication unit and stores the specification to the storage unit.

Preferably, the vehicle is configured to receive power that is supplied from the external power supply when the external power supply normally operates, and the control device calculates the specification of the supplied power, as based on power supplied from the external power supply, and stores the specification to the storage unit.

Preferably, the power generation unit includes a rechargeable power storage device, and the power feeding unit receives power discharged from the power storage device and converts the received power into power to drive the load.

Preferably, the vehicle further includes an internal combustion engine as a source of force to drive the vehicle. The power generation unit includes a rechargeable power storage device, and a power generator configured to use an output of the internal combustion engine to generate power. The power feeding unit converts at least one of power discharged from the power storage device and power generated by the power generator into power to drive the load.

The present invention in another aspect provides a vehicle capable of supplying power to a load external to the vehicle, the load being configured to receive power supplied from an external power supply and be driven thereby and to also receive power from the vehicle and be driven thereby once the external power supply has failed. The vehicle includes: a power generation unit; a power feeding unit for receiving power from the power generation unit and supplying the received power to the load; a storage unit for storing therein a specification of power supplied from the external power supply to the load; and a control device that stores the specification of the supplied power to the storage unit when the external power supply normally operates, and that also controls the power feeding unit to convert power that is received from the power generation unit into power to drive the load, as based on the specification of the supplied power that is stored in the storage unit, once the external power supply has failed.

Preferably, the vehicle further includes a communication unit for communicating outside the vehicle, and when the external power supply normally operates, the control device receives the specification of the supplied power from outside the vehicle via the communication unit and stores the specification to the storage unit.

Preferably, the vehicle is configured to receive power supplied from the external power supply when the external power supply normally operates, and the control device calculates the specification of the supplied power, as based on power supplied from the external power supply, and stores the specification to the storage unit.

ADVANTAGEOUS EFFECTS OF INVENTION

The present invention thus ensures that a vehicle's power is supplied to a load external to the vehicle when external power supply has failed.

BRIEF DESCRIPTION OF DRAWINGS

Fig. 1 schematically shows a configuration of a power supply system according to an embodiment of the present invention.
Fig. 2 illustrates a configuration of the vehicle in Fig. 1.
Fig. 3 shows the power supply system when an external power supply has failed.
Fig. 4 illustrates how the power supply system in the embodiment of the present invention operates in a normal mode.
Fig. 5 is a flowchart for illustrating how the vehicle and a charging stand operate in the power supply system in the embodiment of the present invention.
Fig. 6 illustrates how the power supply system in the embodiment of the present invention in an exemplary variation operates in the normal mode.
Fig. 7 is a flowchart for illustrating how the vehicle and the charging stand operate in the power supply system in the embodiment of the present invention in the exemplary variation.

DESCRIPTION OF EMBODIMENTS

Hereinafter reference will be made to the drawings to describe the present invention in embodiments more specifically. In the figures, identical or corresponding components are identically denoted.

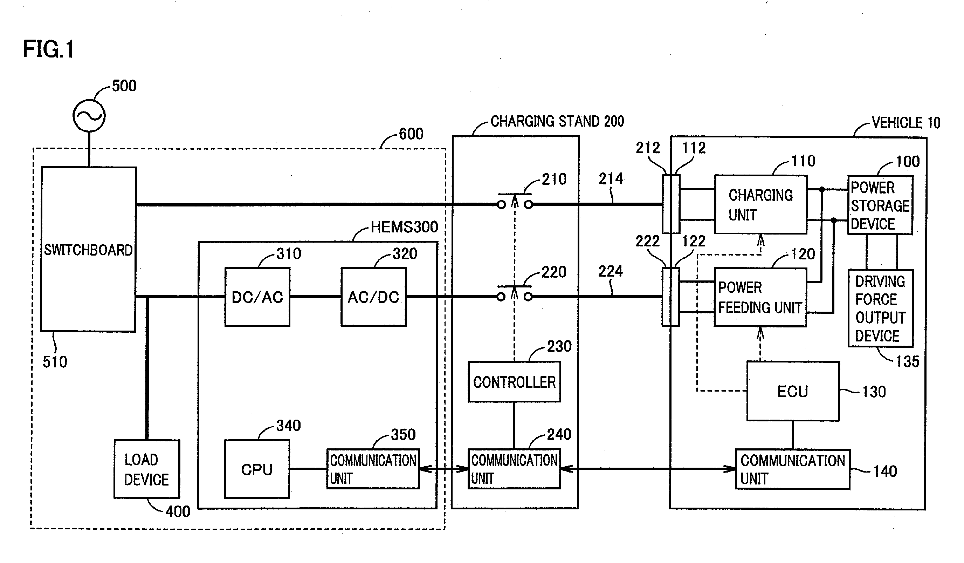

Fig. 1 schematically shows a configuration of a power supply system according to an embodiment of the present invention.

With reference to Fig. 1, the power supply system includes a vehicle 10, a charging stand 200, a home energy management system (HEMS) 300, a load device 400, a power supply 500 external to vehicle 10 (hereinafter also referred to as "external power supply"), and a switchboard 510.

The present invention in the embodiment provides vehicle 10 as a so called plug-in type electrically powered vehicle capable of electrically charging an in-vehicle power storage device via external power supply 500. Note that the electrically powered vehicle may not be limited in configuration in particular as long as it can travel on power received from the in-vehicle power storage device. Vehicle 10 includes a hybrid vehicle, an electric vehicle, a fuel cell powered vehicle and the like for example.

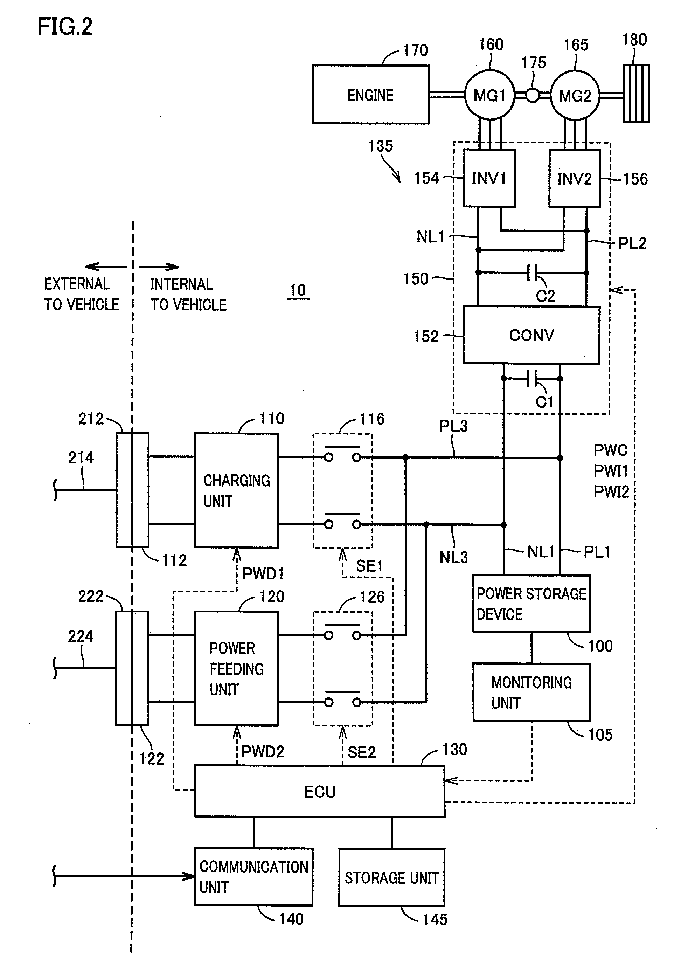

Vehicle 10 includes a power storage device 100, a driving force output device 135, an electronic control unit (ECU) 130 for generally controlling the operation of vehicle 10, a communication unit 140, and a storage unit 145 (see Fig. 2).

Power storage device 100 is a rechargeably configured power reservoir element, and representatively a lithium ion battery, a nickel metal hydride battery or a similar rechargeable battery. Alternatively, an electric double layer capacitor or a similar power reservoir element other than a battery may configure power storage device 100. Fig. 1 shows a configuration of a system of vehicle 10 that is relevant to controlling electrically charging and discharging power storage device 100. Power storage device 100 is provided with a battery sensor (not shown) for sensing the voltage and current of power storage device 100.

A monitoring unit 105 (see Fig. 2) detects a value indicative of a state of power storage device 100 based on an output of the battery sensor provided for power storage device 100. In other words, the value includes the voltage and/or current of power storage device 100. As described above, power storage device 100 is representatively a rechargeable battery, and accordingly, the voltage and current of power storage device 100 will hereinafter also be referred to as battery voltage and battery current, respectively. Furthermore, the battery voltage and the battery current will hereinafter also be referred to as "battery data" collectively.

Driving force output device 135 uses power stored in power storage device 100 to generate force to drive vehicle 10. Specifically, driving force output device 135 operates in response to a drive instruction received from ECU 130 to generate force for driving vehicle 10 and outputs the generated driving force to a driving wheel (not shown) of vehicle 10. Note that the drive instruction is a control instruction generated based on force requested to drive or brake the vehicle while vehicle 10 is travelling. Specifically, ECU 130 calculates force required for the entirety of vehicle 10 to drive or brake the vehicle in response to the state of vehicle 10 as a vehicle, the driver's operation such as how much the accelerator pedal is stepped on, the position of the shift lever, how much the brake pedal is stepped on, and the like. Then, ECU 130 generates an instruction to drive driving force output device 135 to implement power requested to drive or brake the vehicle.

Furthermore, when driving force output device 135 receives an instruction from ECU 130 to generate power, it generates power to be supplied to load device 400 external to the vehicle and outputs the generated power to a power feeding unit 120. Note that the instruction to generate power is a control instruction issued to generate power supplied to load device 400 in an emergency power generation mode described later.

With reference to Fig. 2, vehicle 10 (Fig. 1) will further be described in configuration.

With reference to Fig. 2, driving force output device 135 includes a power conversion unit (a power control unit: PCU) 150, motor generators 160, 165, a driving force transmission gear 175, an engine 170, and a driving wheel 180.

PCU 150 is connected to power storage device 100. Power storage device 100 supplies PCU 150 with power for generating force to drive vehicle 10. Furthermore, power storage device 100 stores power generated by motor generators 160, 165. Specifically, PCU 150 includes a converter 152, inverters 154, 156, and capacitors C1 and C2.

Converter 152 operates in response to a control signal PWC received from ECU 130 to perform voltage conversion between power lines PL1 and NL1 and power lines PL2 and NL1.

Inverters 154, 156 are connected to power lines PL2 and NL1 in parallel. Inverters 154, 156 operate in response to control signals PMI1 and PMI2 received from ECU 130 to convert direct current (dc) power that is received from converter 152 into alternating current (ac) power to drive motor generators 160, 165, respectively.

Capacitor C1 is provided between power lines PL 1 and NL1, and decreases voltage variation caused between power lines PL1 and NL1.

Motor generator 160, 165 is an ac rotating electric machine, and for example is a permanent-magnet type, synchronous motor having a rotor with a permanent magnet embedded therein.

Motor generators 160, 165 output torque, which is in turn transmitted to driving wheel 180 via driving force transmission gear 175 configured of a speed reducer, a driving force split device and the like and thus causes vehicle 10 to travel. When vehicle 10 is braked regeneratively, motor generator 160, 165 can generate power by the torque of driving wheel 180. Then, the generated power is converted by PCU 150 into power charged to power storage device 100.

Furthermore, motor generators 160, 165 are also coupled with engine 170 via driving force transmission gear 175. Then, motor generators 160, 165 and engine 170 are cooperatively operated by ECU 130 to generate force required to drive the vehicle. Furthermore, motor generators 160, 165 can generate power by the rotation of engine 170, and the generated power can be used to electrically charge power storage device 100. Note that in the present embodiment, motor generator 165 is used exclusively as an electric motor for driving driving wheel 180 whereas motor generator 160 is used exclusively as a power generator driven by engine 170 for the sake of illustration.

Note that while Fig. 2 illustrates a configuration provided with two motor generators, the number of the motor generators is not limited thereto, and a single motor generator or three or more motor generators may be provided.

Furthermore, while the present embodiment is described with vehicle 10 illustrated as a hybrid vehicle, as described above, vehicle 10 is not limited in configuration as long as it is a vehicle that can use power generated by the power generator driven by engine 170 and/or power output from power storage device 100 to supply power to a load device external to the vehicle. In other words, vehicle 10 includes a hybrid vehicle which generates force via an engine and an electric motor to drive the vehicle, as shown in Fig. 2, and in addition thereto, a vehicle provided with a power generator which does not generate force to drive the vehicle but generates power via an engine, an electric vehicle or a fuel cell powered vehicle which does not have an engine mounted therein, and the like.

Vehicle 10 further includes an inlet 112 provided in the body of vehicle 10, a charging unit 110, and a charging relay 116 as a configuration for electrically charging power storage device 100 with power received from external power supply 500. Note that external power supply 500 is representatively configured by a commercial power grid of single-phase ac. However, the commercial power grid may be replaced with or cooperate with a solar battery panel provided on a roof of a residence or the like to generate power to supply power of external power supply.

To inlet 112 is connected a charging connector 212 of charging cable 214. Then from external power supply 500 power is transmitted via charging cable 214 to vehicle 10.

charging unit 110 is a device receiving power from external power supply 500 for electrically charging power storage device 100. Charging unit 110 is provided between inlet 112 and power storage device 100. Charging unit 110 follows a control instruction PWD1 received from ECU 130 to convert ac power that is received from external power supply 500 via charging cable 214 and inlet 112 into dc power for electrically charging power storage device 100.

Between charging unit 110 and power storage device 100 is provided charging relay 116 connected such that it is inserted to power lines PL3 and NL3. Charging relay 116 is turned on and off in response to a relay control signal SE1 issued from ECU 130. Charging relay 116 is used as a representative example of a switch device which can interrupt a path used to electrically charge power storage device 100. That is, any form of switch device is applicable in place of charging relay 116.

When power storage device 100 is electrically charged via external power supply 500, ECU 130 generates control instruction PWD1 for controlling charging unit 110 and outputs the generated control instruction PWD1 to charging unit 110. At the time, ECU 130 operates in response to a pilot signal received from a charging circuit interrupting device (not shown) provided at an electric wire section of charging cable 214 for switching between supplying and interrupting power received from external power supply 500 to determine the type of external power supply 500 and control charging unit 110 in accordance with the type of external power supply 500 determined.

Furthermore, vehicle 10 further includes an inlet 122 provided in the body of vehicle 10, a power feeding unit 120, and a power feeding relay 126 as a configuration for supplying power to load device 400 (see Fig. 1) external to the vehicle.

To inlet 122 is connected a power feeding connector 222 of power feeding cable 224. Then, power discharged from power storage device 100 and/or that generated from driving force output device 135 (or motor generator 160) are/is transmitted to load device 400 via power feeding cable 224. In other words, power storage device 100 and/or driving force output device 135 (or motor generator 160) correspond(s) to a "power generation unit" provided for generating power supplied external to the vehicle.

Power feeding unit 120 is a device receiving power discharged from power storage device 100 and/or that generated from driving force output device 135 for feeding the received power to load device 400 external to the vehicle. Power feeding unit 120 operates in response to a control instruction PWD2 received from ECU 130 to receive via power lines PL3 and NL3 the power discharged from power storage device 100 and/or that generated from driving force output device 135, which are both dc power, and convert the received power to ac power for driving load device 400 external to the vehicle.

Between power feeding unit 120 and power storage device 100 is provided power feeding relay 126 connected such that it is inserted to power lines PL3 and NL3. Power feeding relay 126 is turned on and off in response to a relay control signal SE2 issued from ECU 130. Power feeding relay 126 is used as a representative example of a switch device which can interrupt an electrically discharging path provided from power storage device 100 and/or driving force output device 135. That is, any form of switch device is applicable in place of power feeding relay 126.

Although not shown in Fig. 1 or Fig. 2, ECU 130 includes a central processing unit (CPU), a storage device, and an input/output buffer, and receives a signal from each sensor and outputs a control signal to each device, and also controls vehicle 10 and each device. Note that such control may not be processed by software, and may be processed by dedicated hardware (or electronic circuitry).

ECU 130 receives the battery data (indicating the battery voltage and the battery current) from monitoring unit 105 and therefrom calculates the state of charge (SOC) of power storage device 100. An SOC indicates a currently available capacity relative to a full charge capacity in percentages (0-100%). How the SOC of power storage device 100 is calculated can be done in any known manner and accordingly, will not be described in detail.

ECU 130 generates and outputs a control instruction for controlling PCU 150, charging unit 110, charging relay 116, power feeding unit 120, and power feeding relay 126.

ECU 130 communicates via communication unit 140 via a wire or wirelessly with communication units 240 and 350 provided to charging stand 200 and HEMS 300, respectively, external to the vehicle. Then, ECU 130 receives information from communication units 240, 350 of charging stand 200 and HEMS 300 and stores the information to storage unit 145.

Note that vehicle 10, charging stand 200, and HEMS 300 can communicate via power line communication (PLC). In that case, communication units 140,240,350 are each configured of a PLC unit, and transmit information via a power line.

The present invention in the embodiment thus provides vehicle 10 configured to be capable of electrically charging in-vehicle power storage device 100 by external power supply 500 and also supplying power therefrom to load device 400 external to vehicle 10. In the following description, electrically charging power storage device 100 by external power supply 500 will also be referred to as "external charging", and supplying outside the vehicle the power discharged from power storage device 100 and/or the power generated by driving force output device 135 (or motor generator 160) will also be referred to as "external power feeding".

Note that in the present embodiment the external charging is not essential, and a vehicle traveling only on force provided from the engine to drive the vehicle may not be provided with a configuration allowing the external charging.

Furthermore, the Figs. 1 and 2 configuration may be replaced with a configuration which allows an external power supply and a vehicle that are out of physical contact to be electromagnetically coupled together to supply power, specifically, the external power supply may be provided with a primary coil and the vehicle may be provided with a secondary coil, and the mutual inductance between the primary coil and the secondary coil may be utilized to supply power.

With reference again to Fig. 1, charging stand 200 includes charging cable 214, charging connector 212, and a relay 210 for the external charging. Furthermore, charging stand 200 includes power feeding cable 224, power-feeding connector 222, and a relay 220 for the external power feeding. Charging stand 200 further includes a controller 230 and communication unit 240. Charging stand 200 is electrically connected to switchboard 510 provided in a building such as premises 600. charging cable 214 has one end connected to relay 210 and the other end connected to charging connector 212. Power feeding cable 224 has one end connected to relay 220 and the other end connected to power feeding connector 222. Charging cable 214 and power feeding cable 224 may be separatable from charging stand 200. Alternatively, a charging cable and a power feeding cable that are provided to vehicle 10 may be used to connect charging stand 200 and vehicle 10 together.

Furthermore, while Fig. 1 shows charging cable and connector 214 and 212 and power feeding cable and connector 224 and 222 provided discretely, alternatively a single cable and a single connector may be switched between charging and power feeding and thus used. In that case, vehicle 10 also has inlets 112 and 122 provided as a single inlet switchable between charging and power feeding.

For the external charging, charging connector 212 is connected to vehicle 10 at inlet 112 and relay 210 is closed, and vehicle 10 thus receives power from external power supply 500 through premises 600 via switchboard 510. In contrast, for the external power feeding, power feeding connector 222 is connected to vehicle 10 at inlet 122 and relay 220 is closed, and vehicle 10 thus supplies premises 600 with power. Relays 210, 220 are opened/closed as controlled by controller 230.

Controller 230 is implemented for example as a CPU. Controller 230 is configured to be capable of communicating with the vehicle 10 ECU 130 via communication units 240,140 wirelessly or via a wire. Controller 230 is configured to be capable of communicating with the HEMS 300 CPU 340 via communication units 240, 350 wirelessly or via a wire.

Controller 230 transmits a signal indicative of a state of relays 210 and 220 (i.e., whether the relays are opened/closed) to the HEMS 300 CPU 340 and the vehicle 10 ECU 130. In other words, controller 230 transmits to CPU 340 and ECU 130 a signal indicating which of the external charging and the external power feeding has been selected.

HEMS 300 is provided internal or external to premises 600. HEMS 300 is electrically connected to switchboard 510 and charging stand 200. HEMS 300 includes a DC/AC converter 310, an AC/DC converter 320, CPU 340, and communication unit 350.

AC/DC converter 320 receives ac power from charging stand 200 and converts it into dc power. DC/AC converter 310 receives the dc power from AC/DC converter 320 and converts it into ac power. AC/DC converter 320 and DC/AC converter 310 are controlled in accordance with a control signal which CPU 340 generates based on a signal transmitted from the charging stand 200 communication unit 240 and indicating which of the external charging and the external power feeding has been selected.

Load device 400 is any electrical appliance receiving power from external power supply 500 via switchboard 510 for operation. Load device 400 may be premises 600 or may be individual electric appliances, for example. Alternatively, load device 400 may be a vehicle other than vehicle 10.

Herein, in the Fig. 1 power supply system, if external power supply 500 has failed, the power supplied to load device 400 is interrupted. Thus, once external power supply 500 has failed, then, in place of external power supply 500, vehicle 10 is regarded as a power supply source, and from vehicle 10 power is supplied to load device 400. In the following description, a mode allowing vehicle 10 to be used as a backup power supply for external power supply 500 to perform the external power feeding will be referred to as an "emergency power generation mode". In contrast, a mode which allowing the external power feeding and the external charging when external power supply 500 normally operates will be referred to as a "normal mode".

In the emergency power generation mode, the power feeder or vehicle 10 is required to generate ac power of a specification that matches that of the power recipient or load device 400. The specification of load device 400 (hereinafter also referred to as a "load specification") is a specification for power supplied to load device 400 and it includes and the frequency and voltage of external power supply 500. As an example, if external power supply 500 is a commercial power grid, the commercial power grid normally has a frequency of 50 kHz or 60 kHz. Furthermore, the commercial power grid generates a commercial ac voltage of 100 V or 200 V.

In the normal mode, the vehicle 10 ECU 130 can communicate with HEMS 300 and charging stand 200 via communication units 140, 240, 350 to obtain the load specification. Then, vehicle 10 can generate appropriate ac power corresponding to the obtained load specification and supply load device 400 therewith.

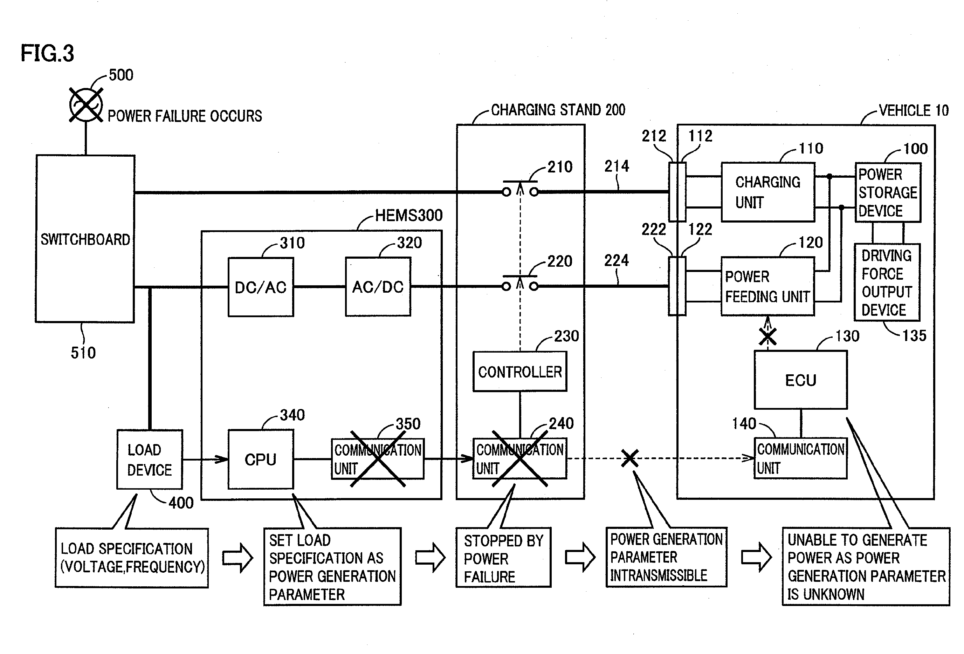

In contrast, once external power supply 500 has failed, the above described communication function will not normally operate, and the vehicle 10 ECU 130 can no longer obtain the load specification. Thus, vehicle 10 cannot generate ac power of an appropriate frequency and voltage corresponding to load device 400 and supply load device 400 therewith. Hereinafter, what problem will arise once external power supply 500 has failed will be described with reference to Fig. 3.

Fig. 3 shows the power supply system when external power supply 500 has failed.

With reference to Fig. 3, a load specification, or external power supply 500's frequency and voltage, is set as a power generation parameter by the HEMS 300 CPU 340. The power generation parameter is transmitted to the vehicle 10 ECU 130 via communication units 350, 240, 140, and used by ECU 130 for a power feeding operation in vehicle 10. Specifically, the vehicle 10 ECU 130 converts the power that is discharged from power storage device 100 into the ac power defined by the power generation parameter and supplies it external to the vehicle. Furthermore, ECU 130 converts the dc power that is generated by driving force output device 135 into the ac power defined by the power generation parameter and supplies it external to the vehicle.

However, once external power supply 500 has failed, then, as shown in Fig. 3, the power supplied to HEMS 300 and charging stand 200 is interrupted, and communication unit 350 of HEMS 300 and communication unit 240 of charging stand 200 stop their operations. Thus the power generation parameter cannot be transmitted from HEMS 300 or charging stand 200 to vehicle 10.

In vehicle 10, in contrast, once that external power supply 500 has failed has been detected, ECU 130 turns off the normal mode and turns on the emergency power generation mode. Once the emergency power generation mode has been turned on, ECU 130 controls a power conversion operation in power feeding unit 120 to convert the dc power that is output from power storage device 100 and/or driving force output device 135 into the ac power suitable for driving load device 400 external to the vehicle. However, as described above, ECU 130 cannot obtain the power generation parameter for defining the ac power's frequency and voltage, and hence cannot control power feeding unit 120.

In order to resolve such a disadvantage, the present embodiment provides a power supply system such that when external power supply 500 normally operates, i.e., in the normal mode, a specification of power supplied to load device 400 (or a load specification) is previously obtained and stored to storage unit 145 as a power generation parameter. Then, once external power supply 500 has failed and the emergency power generation mode is turned on, vehicle 10 reads the power generation parameter stored in storage unit 145 and uses the read power generation parameter to control a power conversion operation of power feeding unit 120.

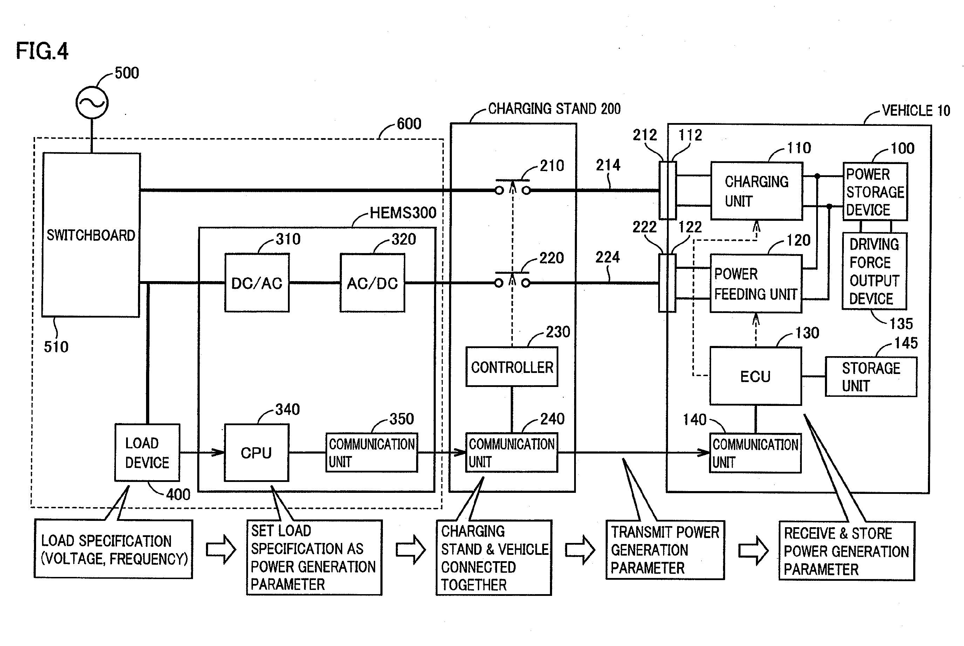

Fig. 4 illustrates how the power supply system in the embodiment of the present invention operates in the normal mode.

With reference to Fig. 4, a load specification, or external power supply 500's frequency and voltage, is set as a power generation parameter by the HEMS 300 CPU 340. Then, when charging connector 212 is connected to vehicle 10 at inlet 112 or power feeding connector 222 is connected to vehicle 10 at inlet 122 to connect charging stand 200 and vehicle 10 together, CPU 340 transmits the power generation parameter to vehicle 10 via communication unit 350 and the charging stand 200 communication unit 240. At the time, CPU 340 associates the power generation parameter with an identification code ID of charging stand 200 and thus transmits them.

Vehicle 10 receives the power generation parameter and the ID of charging stand 200 via communication unit 140, and ECU 130 associates the received power generation parameter with the ID of charging stand 200 and thus stores them to storage unit 145.

Once external power supply 500 has failed and the emergency power generation mode is turned on, the vehicle 10 ECU 130 uses the ID of charging stand 200 as a clue to read the power generation parameter from storage unit 145. Then, ECU 130 uses the read power generation parameter to control the power conversion operation in power feeding unit 120. This allows vehicle 10 to output appropriate ac power corresponding to a specification of power supplied to load device 400 and supply it to load device 400 via charging stand 200 and HEMS 330.

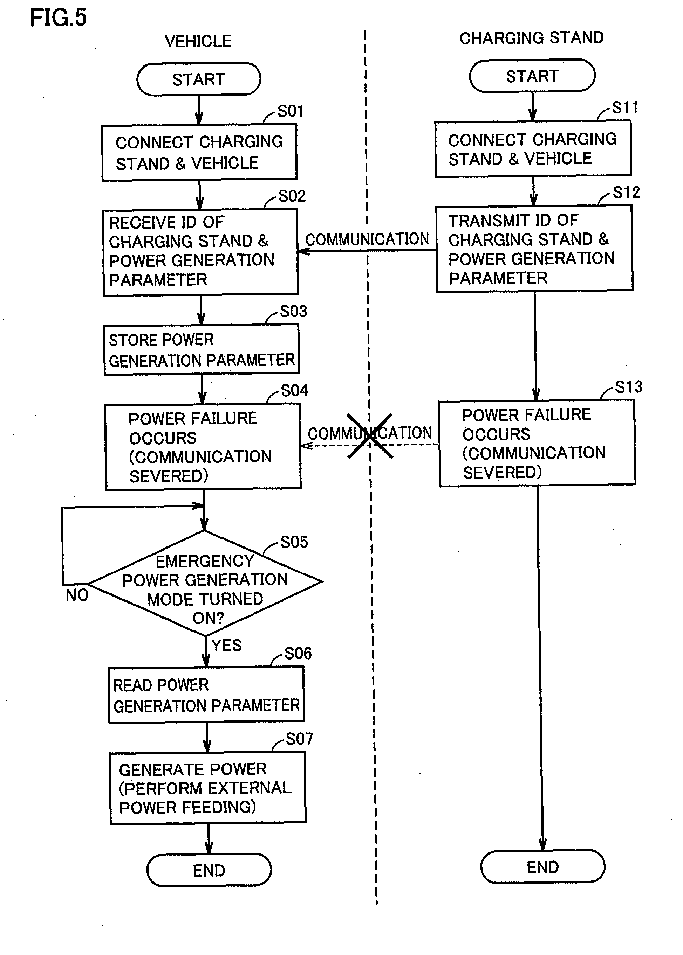

Fig. 5 is a flowchart for illustrating how the vehicle and the charging stand operate in the power supply system in the embodiment of the present invention.

With reference to Fig. 5, Steps S01 and S11 are performed to connect charging stand 200 and vehicle 10, and in response, Step S12 is performed to cause charging stand 200 to transmit a power generation parameter that is set by the HEMS 300 CPU 340 (or a load specification) to vehicle 10 via communication unit 240.

In vehicle 10, Step S02 is performed to receive the power generation parameter and the ID of charging stand 200 via communication unit 140, and in response, Step S03 is performed to cause ECU 130 to associate the received power generation parameter with the ID of charging stand 200 and thus store them to storage unit 145.

In Steps S04 and S13 external power supply 500 fails, and in response, communication unit 240 of charging stand 200 stops its operation, and communications between charging stand 200 and vehicle 10 are interrupted.

Once external power supply 500 has failed, then in vehicle 10 step S05 is performed to cause ECU 130 to determine whether the emergency power generation mode has been turned on. If not (NO in Step S05), the control returns to Step S05. If the emergency power generation mode is turned on (YES in Step S05), ECU 130 proceeds to Step S06 to read the power generation parameter in storage unit 145 by using the ID of charging stand 200 as a clue. ECU 130 then proceeds to Step S07 to control the power conversion operation of power feeding unit 120 with the read power generation parameter to generate ac power to be supplied to load device 400 from vehicle 10.

The ac power generated by vehicle 10 is supplied to load device 400 via charging stand 200 and HEMS 300. Thus, once external power supply 500 has failed, load device 400 receives power supplied from vehicle 10, rather than external power supply 500, and is thus driven thereby.

In the present embodiment, power storage device 100 and driving force output device 135 (or motor generator 160) correspond to a "power generation unit", power feeding unit 120 corresponds to a "power feeding unit", and ECU 130 corresponds to a "control device". Furthermore, HEMS 300 and charging stand 200 correspond to a "power feeding device".

As has been described above, the present invention in an embodiment can provide a power supply system such that when an external power supply normally operates, a specification of power supplied to a load device external to a vehicle (or a load specification) can be stored in the vehicle's storage unit, and once the external power supply has failed, the specification stored in the storage unit can be used to supply appropriate power that corresponds to the load specification from the vehicle. This ensures that once the external power supply has failed, backup power is generated to drive the load device stably.

Note that while Fig. 1 and Fig. 2 show charging unit 110 and power feeding unit 120 as discrete devices, a single power conversion unit may alternatively be provided to be capable of bidirectional power conversion of charging power and feeding power.

Furthermore, while Fig. 1 shows charging stand 200 and HEMS 300 each provided with a communication unit by way of example, alternatively, any one of charging stand 200 and HEMS 300 may be provided with a communication unit for communicating with vehicle 10.

Exemplary Variation

In the above embodiment, a load specification is stored in vehicle 10 at storage unit 145 as the load specification is transmitted to vehicle 10 from charging stand 200 when external power supply 500 normally operates.

It is difficult to apply the above configuration, however, when one of charging stand 200 and vehicle 10 does not have a communication unit.

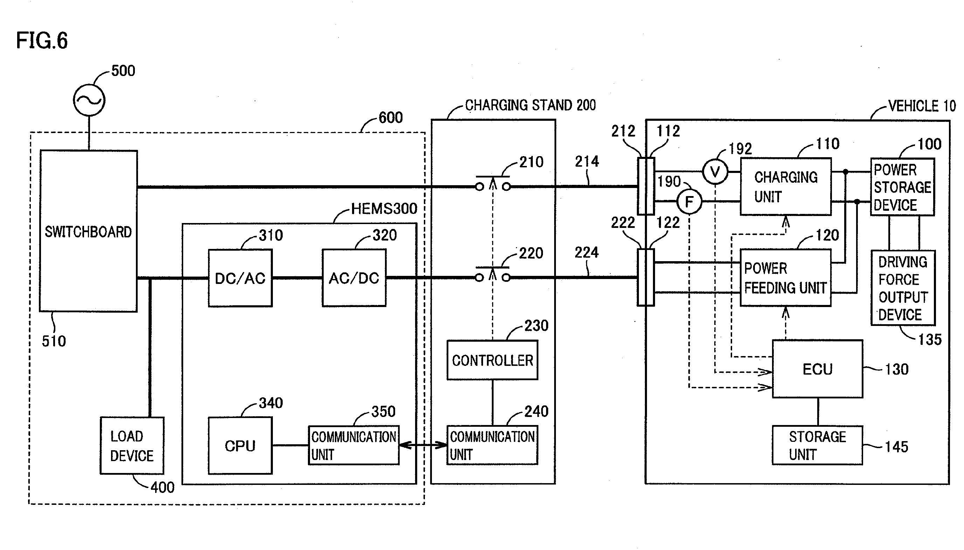

Accordingly, in the present variation, when vehicle 10 is supplied with power from external power supply 500, i.e., in the external charging, a load specification is calculated at vehicle 10 and stored to storage unit 145. Fig. 6 illustrates how the power supply system in the embodiment of the present invention in the exemplary variation operates in the normal mode.

With reference to Fig. 6, the power supply system in the present variation differs from that shown in Fig. 1 in that vehicle 10 further includes a frequency sensor 190 and a voltage sensor 192.

Frequency sensor 190 is connected to a power line that connects inlet 112 and charging unit 110 together, inserted thereto. Frequency sensor 190 senses a frequency f of ac power supplied to the power line through inlet 112 from charging cable 214, and outputs the sensed value to ECU 130. Voltage sensor 192 is connected to a power line, inserted thereto, and senses voltage VAC of ac power supplied to the power line and outputs the sensed value to ECU 130.

Once charging stand 200 and vehicle 10 have been connected via charging cable 214 and the external charging has thus started, ECU 130 obtains the values that are sensed by frequency sensor 190 and voltage sensor 192 while the external charging is performed. Furthermore, ECU 130 obtains a supplied current IAC that flows through charging unit 110, which corresponds to a current charged to power storage device 100. Then, ECU 130 calculates a load specification, or a frequency and voltage of external power supply 500, from the supplied power's frequency f, voltage VAC, and supplied current IAC as obtained.

Specifically, ECU 130 uses frequency f that is sensed by frequency sensor 190 as frequency f of external power supply 500. Furthermore, ECU 130 applies voltage VAC sensed by voltage sensor 192, supplied current IAC, and a wiring resistance R between vehicle 10 and switchboard 510 to an expression (1) to calculate voltage V of external power supply 500.

$$V = VAC + IAC \times R \qquad \dots \quad (1).$$

Note that, in expression (1), wiring resistance R is previously calculated from the length of an electric wire of the power line (including charging cable 214) provided between vehicle 10 and switchboard 510.

ECU 130 stores the calculated frequency f and voltage V of external power supply 500 as a power generation parameter to storage unit 145. Then, once external power supply 500 has failed and the emergency power generation mode is turned on, ECU 130 reads the power generation parameter from storage unit 145 and uses the read power generation parameter to control a power conversion operation in power feeding unit 120. This allows vehicle 10 to output appropriate ac power corresponding to a specification of load device 400 and supply it to load device 400 via charging stand 200 and HEMS 300.

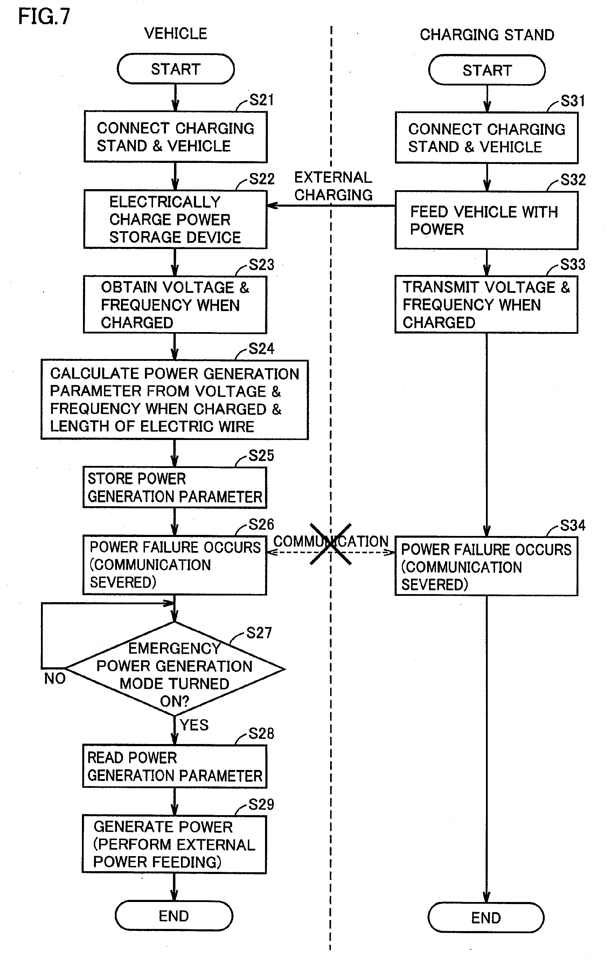

Fig. 7 is a flowchart for illustrating how the vehicle and the charging stand operate in the power supply system in the embodiment of the present invention in the exemplary variation.

With reference to Fig. 7, Steps S21 and S31 are performed to connect charging stand 200 and vehicle 10 via charging cable 214, and in response, Step S32 is performed to cause charging stand 200 to supply power from external power supply 500 to vehicle 10.

In vehicle 10, Step S22 is performed; more specifically, when charging unit 110 receives power from external power supply 500, charging unit 110 converts the received power into power suitable for electrically charging power storage device 100.

The vehicle 10 ECU 130 proceeds to Step S23 to obtain frequency f and voltage VAC of the power that is supplied by external power supply 500 from frequency sensor 190 and voltage sensor 192, respectively. Furthermore, ECU 130 obtains a charging current IAC. The vehicle 10 ECU 130 then proceeds to Step S24 to calculate frequency f and voltage V of external power supply 500 (or a load specification). ECU 130 sets the calculated frequency f and voltage V of external power supply 500 as a power generation parameter and proceeds to Step S25 to store the power generation parameter to storage unit 145.

In Steps S26 and S34 external power supply 500 fails, and in response, communication unit 240 of charging stand 200 stops its operation, and communications between charging stand 200 and vehicle 10 are interrupted.

Once external power supply 500 has failed, then in vehicle 10 step S27 is performed to cause ECU 130 to determine whether the emergency power generation mode has been turned on. If not (NO in Step S27), the control returns to Step S27. If the emergency power generation mode is turned on (YES in Step S27), ECU 130 proceeds to Step S28 to read the power generation parameter in storage unit 145 by using the ID of charging stand 200 as a clue. ECU 130 then proceeds to Step S29 to control the power conversion operation of power feeding unit 120 with the read power generation parameter to generate ac power to be supplied to load device 400 from vehicle 10.

The ac power generated by vehicle 10 is supplied to load device 400 via charging stand 200 and HEMS 300. Load device 400 receives the power supplied from vehicle 10 and is thus driven thereby.

As has been described above, the present invention in the exemplary variation can provide the power supply system such that while the external charging is performed the vehicle's ECU calculates a load specification based on power supplied from an external power supply and stores the calculated load specification to a storage unit internal to the vehicle as a power generation parameter. If the vehicle does not have a function to communicate with the charging stand or the HEMS, it can obtain the load specification, and once the external power supply has failed, the specification stored in the storage unit can be used to supply appropriate power that corresponds to the load specification from the vehicle. This ensures that when the external power supply has failed, backup power is generated to drive the load device stably.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

INDUSTRIAL APPLICABILITY

The present invention is applicable to power supply systems which supply power from a vehicle to a load external to the vehicle.

REFERENCE SIGNS LIST

10 vehicle; 100 power storage device; 105 monitoring unit; 110 charging unit; 112, 122 inlet; 116 charging relay; 120 power feeding unit; 126 power feeding relay; 135 driving force output device; 140,240, 350 communication unit; 145 storage unit; 152 converter; 154, 156 inverter; 160, 165 motor generator; 170 engine; 175 driving force transmission gear; 180 driving wheel; 190 frequency sensor; 192 voltage sensor; 200 charging stand; 210, 220 relay; 212 charging connector; 214 charging cable; 222 power feeding connector; 224 power feeding cable; 230 controller; 300 HEMS; 310 AC/DC converter; 320 DC/AC converter; 400 load device; 500 external power supply; 510 switchboard; 600 premises.

**Claims**

1.  A power supply system comprising:

    a vehicle (10); and
    a power feeding device (200, 300) for receiving power from said vehicle (10) and feeding the received power to a load (400) external to said vehicle (10),
    said load (400) being configured to receive power supplied from an external power supply (500) and be driven thereby and to also receive power from said vehicle (10) and be driven thereby once said external power supply (500) has failed,
    said vehicle (10) including
    a power generation unit (100, 135),
    a power feeding unit (120) for receiving power from said power generation unit (100, 135) and supplying the received power to said power feeding device (200, 300),
    a storage unit (145) for storing therein a specification of power supplied from said external power supply (500) to said load (400), and
    a control device (130) that stores said specification of the supplied power to said storage unit (145) when said external power supply (500) normally operates, and that also controls said power feeding unit (120) to convert power that is received from said power generation unit (100, 135) into power to drive said load (400), as based on said specification of the supplied power that is stored in said storage unit (145), once said external power supply (500) has failed.

2.  The power supply system according to claim 1, said vehicle (10) further including a communication unit (140) for communicating with said power feeding device (200, 300), wherein when said external power supply (500) normally operates, said control device (130) receives said specification of the supplied power from said power feeding device (200, 300) via said communication unit (140) and stores said specification to said storage unit (145).

3.  The power supply system according to claim 1, wherein:

    said vehicle (10) is configured to receive power that is supplied from said external power supply (500) when said external power supply (500) normally operates; and
    said control device (130) calculates said specification of the supplied power, as based on power supplied from said external power supply (500), and stores said specification to said storage unit (145).

4.  The power supply system according to any one of claims 1-3, wherein:

    said power generation unit (100, 135) includes a rechargeable power storage device (100); and said power feeding unit (120) receives power discharged from said power storage device (100) and converts the received power into power to drive said load (400).

5.  The power supply system according to any one of claims 1-3, said vehicle (10) further including an internal combustion engine (170) as a source of force to drive said vehicle, wherein:

    said power generation unit (100, 135) includes a rechargeable power storage device (100), and a power generator (160) configured to use an output of said internal combustion engine (170) to generate power; and
    said power feeding unit (120) converts at least one of power discharged from said power storage device (100) and power generated by said power generator (160) into power to drive said load (400).

6.  A vehicle (10) capable of supplying power to a load (400) external to the vehicle, said load (400) being configured to receive power supplied from an external power supply (500) and be driven thereby and to also receive power from the vehicle (10) and be driven thereby once said external power supply (500) has failed, the vehicle comprising:

    a power generation unit (100, 135);
    a power feeding unit (120) for receiving power from said power generation unit (100, 135) and supplying the received power to said load (400);
    a storage unit (145) for storing therein a specification of power supplied from said external power supply (500) to said load (400); and
    a control device (130) that stores said specification of the supplied power to said storage unit (145) when said external power supply (500) normally operates, and that also controls said power feeding unit (120) to convert power that is received from said power generation unit (100, 135) into power to drive said load (400), as based on said specification of the supplied power that is stored in said storage unit (145), once said external power supply (500) has failed.

7.  The vehicle according to claim 6, further comprising

**EP 2 773 016 A1**

a communication unit (140) for communicating outside the vehicle (10), wherein when said external power supply (500) normally operates, said control device (130) receives said specification of the supplied power from outside the vehicle (10) via said communication unit (140) and stores said specification to said storage unit (145).

8. The vehicle according to claim 6, wherein:

the vehicle (10) is configured to receive power supplied from said external power supply (500) when said external power supply (500) normally operates; and
said control device (130) calculates said specification of the supplied power, as based on power supplied from said external power supply (500), and stores said specification to said storage unit (145).

FIG.1

VEHICLE 10

100 POWER STORAGE DEVICE

135 DRIVING FORCE OUTPUT DEVICE

110 CHARGING UNIT — 112 / 212

120 POWER FEEDING UNIT — 122 / 222

130 ECU

140 COMMUNICATION UNIT

214

224

CHARGING STAND 200

210

220

230 CONTROLLER

240 COMMUNICATION UNIT

HEMS300

320 AC/DC

310 DC/AC

350 COMMUNICATION UNIT

340 CPU

600

500

SWITCHBOARD 510

LOAD DEVICE 400

FIG.2

# FIG.3

POWER FAILURE OCCURS 500

SWITCHBOARD 510

HEMS300

DC/AC 310

AC/DC 320

LOAD DEVICE 400

CPU 340

COMMUNICATION UNIT 350

CHARGING STAND 200

210

214

220

224

CONTROLLER 230

COMMUNICATION UNIT 240

212 112

222 122

CHARGING UNIT 110

POWER FEEDING UNIT 120

ECU 130

COMMUNICATION UNIT 140

VEHICLE 10

POWER STORAGE DEVICE 100

DRIVING FORCE OUTPUT DEVICE 135

LOAD SPECIFICATION (VOLTAGE,FREQUENCY) ⇨ SET LOAD SPECIFICATION AS POWER GENERATION PARAMETER ⇨ STOPPED BY POWER FAILURE ⇨ POWER GENERATION PARAMETER INTRANSMISSIBLE ⇨ UNABLE TO GENERATE POWER AS POWER GENERATION PARAMETER IS UNKNOWN

EP 2 773 016 A1

# FIG.4

EP 2 773 016 A1

# FIG.5

VEHICLE

CHARGING STAND

START

START

S01
CONNECT CHARGING
STAND & VEHICLE

S11
CONNECT CHARGING
STAND & VEHICLE

S02
RECEIVE ID OF
CHARGING STAND &
POWER GENERATION
PARAMETER

← COMMUNICATION

S12
TRANSMIT ID OF
CHARGING STAND &
POWER GENERATION
PARAMETER

S03
STORE POWER
GENERATION PARAMETER

S04
POWER FAILURE
OCCURS
(COMMUNICATION
SEVERED)

COMMUNICATION

S13
POWER FAILURE
OCCURS
(COMMUNICATION
SEVERED)

S05
EMERGENCY
POWER GENERATION
MODE TURNED
ON?

NO

YES

S06
READ POWER
GENERATION PARAMETER

S07
GENERATE POWER
(PERFORM EXTERNAL
POWER FEEDING)

END

END

16

FIG.6

## FIG.7

**VEHICLE**

START

**S21** CONNECT CHARGING STAND & VEHICLE

**S22** ELECTRICALLY CHARGE POWER STORAGE DEVICE

**S23** OBTAIN VOLTAGE & FREQUENCY WHEN CHARGED

**S24** CALCULATE POWER GENERATION PARAMETER FROM VOLTAGE & FREQUENCY WHEN CHARGED & LENGTH OF ELECTRIC WIRE

**S25** STORE POWER GENERATION PARAMETER

**S26** POWER FAILURE OCCURS (COMMUNICATION SEVERED)

**S27** EMERGENCY POWER GENERATION MODE TURNED ON? — NO

YES

**S28** READ POWER GENERATION PARAMETER

**S29** GENERATE POWER (PERFORM EXTERNAL POWER FEEDING)

END

EXTERNAL CHARGING

COMMUNICATION

**CHARGING STAND**

START

**S31** CONNECT CHARGING STAND & VEHICLE

**S32** FEED VEHICLE WITH POWER

**S33** TRANSMIT VOLTAGE & FREQUENCY WHEN CHARGED

**S34** POWER FAILURE OCCURS (COMMUNICATION SEVERED)

END

<div align="center">

**INTERNATIONAL SEARCH REPORT**

</div>

| | International application No. |
|---|---|
| | PCT/JP2011/074807 |

**A. CLASSIFICATION OF SUBJECT MATTER**
*H02J7/34*(2006.01)i, *H02J9/06*(2006.01)i

According to International Patent Classification (IPC) or to both national classification and IPC

**B. FIELDS SEARCHED**

Minimum documentation searched (classification system followed by classification symbols)
H02J7/34, H02J9/06

Documentation searched other than minimum documentation to the extent that such documents are included in the fields searched
Jitsuyo Shinan Koho         1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/010754 A1 (TOYOTA JIDOSHA KABUSHIKI KAISHA), 28 January 2010 (28.01.2010), & CN 102106056 A         & EP 2309617 A1 & JP 2010-35277 A       & JP 4380776 B1 & US 2011/0121779 A1 | 1-8 |
| A | JP 2006-166534 A (Densei-Lambda Kabushiki Kaisha), 22 June 2006 (22.06.2006), (Family: none) | 1-8 |
| A | US 2010/0164287 A1 (HONDA MOTOR CO., LTD.), 01 July 2010 (01.07.2010), & JP 2010-154637 A       & JP 4781425 B2 | 1-8 |

☒  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 20 January, 2012 (20.01.12) | 31 January, 2012 (31.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/074807

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-8380 A  (Nissan Motor Co., Ltd.), 12 January 2001 (12.01.2001), & JP 3985390 B2 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010154637 A
- JP 2001008380 A